Europäisches Patentamt

European Patent Office

Office européen des brevets

(19)

(11) Publication number: **0 338 854**
**A2**

# EUROPEAN PATENT APPLICATION

(12)

(21) Application number: **89304001.4**

(22) Date of filing: **21.04.89**

(51) Int. Cl.⁴: **G 02 B 6/44**

(30) Priority: **22.04.88 GB 8809596**

(43) Date of publication of application:
**25.10.89 Bulletin 89/43**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH (GB)**

**CORNING LIMITED**
**Wear Glass Works**
**Sunderland SR4 6EJ (GB)**

(72) Inventor: **Sadler, Alan Arthur**
**2 Eversley Close Frodsham**
**Warrington Cheshire WA6 6AZ (GB)**

(74) Representative: **Boon, Graham Anthony et al**
**Elkington and Fife Beacon House 113 Kingsway**
**London, WC2B 6PP (GB)**

(54) Optical fibre member.

(57) An optical fibre member is described which is suitable for blowing. This comprises an optical fibre surrounded by a sheath which comprises foamed ethylene vinyl acetate.

EP 0 338 854 A2

## Description

## Optical fibre member

This invention relates to an optical fibre member.

A method is known from EP-A-108590 for installing an optical fibre member in a tubular passageway using a flow of air which travels along the tubular passageway in the desired direction of travel of the optical fibre member. For this purpose the optical fibre member comprises a sheath surrounding one or more optical fibres, the sheath being of low density so as to facilitate its being carried by the flow of air. The sheath may conveniently be of a foamed material, preferably a foamed plastics material, and this invention relates to an optical fibre member which has a foamed sheath.

Polyethylene is a material commonly used in the manufacture of conventional cables, and its properties are widely accepted as suitable for this purpose. In EP-A-157610 it is proposed to use foamed polyethylene as the sheath for an optical fibre member which is to be blown. Although foamed polyethylene can indeed be used for this purpose it has been found that its use gives rise to problems. The melting points of polyethylenes are quite high, typically between 175°C and 210°C. The effect of applying a foamed layer at such temperatures, combined with the tensile modulus values normally found with polyethylene means that as the foam cools it imparts a considerable stress on the optical fibre or fibres, with a correspondingly adverse effect on the optical properties thereof, especially on attenuation.

It has been found that an improved optical fibre member, suitable for blowing by virtue of its bulk and surface properties, can be made by forming the sheath of foamed ethylene vinyl acetate (EVA).

Performance in specific applications can be improved by the use of additives to impart flame retardance or to reduce friction to the surface of the tube.

Accordingly, the present invention provides an optical fibre member suitable for blowing, which comprises at least one optical fibre surrounded by a sheath which comprises foamed ethylene vinyl acetate.

It is to be understood that the foamed sheath may be formed either wholly or partly of EVA. It is also to be understood that the optical fibre or fibres may be surrounded by a plurality of sheath layers, in which case at least one of the layers is of foamed EVA and the other layer or layers may be of other materials, either foamed or unfoamed.

By way of example, the EVA used for the purposes of the present invention may be Evatane 1020 VG2, which is supplied by Atochem UK Limited, Newbury. This is a copolymer of ethylene and vinyl acetate, having a vinyl acetate content of 5% and a melt flow index of 2. In order to make this material foamable a foaming agent is incorporated which, by way of example, may be a masterbatch reference 0561 obtainable from Atochem UK Limited and typically added in an amount equal to about 1% by weight of the EVA. The masterbatch itself is an EVA material containing a chemical blowing agent, typically a modified azodicarbonamide. It is to be understood, however, that a variety of different EVA'S, containing various foaming agents, may be used.

An example of an optical fibre member according to the present invention comprises a single optical fibre having an inner silica portion whose outer diameter is 125 microns and a protective acrylate coating to bring the diameter up to 250 microns, and a foamed ethylene vinyl acetate sheath giving an overall diameter for the member of 580 microns. The member has a mass per unit length of 0.23 g/m.

A method of making such a fibre member is disclosed in our copending application entitled "Method and apparatus for making an optical fibre member" filed on even date herewith and claiming priority from UK Patent Application No. 8809595.5.

## Claims

1. An optical fibre member suitable for blowing, which comprises at least one optical fibre surrounded by a sheath which comprises foamed ethylene vinyl acetate.

2. An optical fibre member according to claim 1, wherein the said sheath is formed of a copolymer of ethylene and vinyl acetate, having a vinyl acetate content of substantially 5%.

3. An optical fibre member according to claim 1 or 2, wherein the said sheath is foamed by means of a chemical blowing agent.

4. An optical fibre according to any preceding claim, comprising a single optical fibre having an inner silica portion and a protective coating thereon, the said sheath surrounding the protective coating.

5. An optical fibre member according to any preceding claim, which comprises at least one further sheath layer in addition to the sheath of foamed ethylene vinyl acetate.